# EUROPÄISCHE PATENTANMELDUNG

(11) **EP 2 246 277 A2**
(43) Veröffentlichungstag der Anmeldung: **03.11.2010**
(21) Anmeldenummer: 10155438.4
(22) Anmeldetag: 04.03.2010
(51) Int. Cl.: B65G 47/22, B65G 47/26

(54) **Vorrichtung und Verfahren zum definierten Zusammenführen von Gebinden und/oder Gebindegruppen**

(30) Priorität: 29.04.2009 DE 102009003845
(71) Anmelder: Krones AG, 93073 Neutraubling (DE)
(72) Erfinder: Eschlbeck, Richard, 83569, Vogtareuth (DE)
(74) Vertreter: Reichert, Werner Franz

(57) **Zusammenfassung**

Es sind eine Vorrichtung (7) und ein Verfahren zum definierten Zusammenführen von Gebinden (1, 2, 3) und/oder Gebindegruppen (4, 4a, 4b, 5a, 5b, 6) mit mindestens zwei Zuförderern (11, 12, 13) und mindestens einem Abförderer (21, 22, 23) offenbart. Zwischen den mindestens zwei Zuförderern (11, 12, 13) und dem mindestens einen Abförderer (21, 22, 23) ist ein Sortierförderer (18) vorgesehen, über dem mindestens ein Greifer (8, 9) angeordnet ist.

## Beschreibung

Die vorliegende Erfindung betrifft eine Vorrichtung zum definierten Zusammenführen von Gebinden und/oder Gebindegruppen mit mindestens zwei Zuförderern und mindestens einem Abförderer.

Die vorliegende Erfindung betrifft auch ein Verfahren zum definierten Zusammenführen von Gebinden und/oder Gebindegruppen mit mindestens zwei Zuförderern und mindestens einem Abförderer.

Das deutsche Patent DE 10 2007 001 973 B4 offenbart eine Vorrichtung zum Zusammenführen von Gebinden (Packs) mit wenigstens zwei die Gebinde zuführenden Bahnen und einer die Gebinde abführenden Bahn. Die Zuführbahnen sind in einem Winkel auf die Abführbahn ausgerichtet. Zwischen den zu- und abführenden Bahnen ist eine Vielzahl von Tragplatten derart verschiebbar angeordnet, dass die Gebinde auf einer Kette von Tragplatten von den Zuführbahnen zu der Abführbahn umgelenkt transportiert werden. Auf den nicht drehbaren Tragplatten kann jeweils eine Gruppe von Gebinden transportiert werden. Die Größe jeweils einer Gebindegruppe ist durch die Fläche der jeweiligen Tragplatte begrenzt. Die Tragplatten erfordern eine komplizierte Mechanik und Steuerung, damit die Gebinde passend von den Zuführbahnen zu der Abführbahn ausgerichtet und transportiert werden können. Die Vorrichtung ist ungeeignet, Gebinde von mehreren Zuführbahnen an mehrere Abführbahnen zu verteilen beziehungsweise die Mechanik und Steuerung wären noch komplizierter.

Die europäische Patentanmeldung EP 1 046 598 A1 offenbart eine Vorrichtung zur Herstellung palettierfähiger Lagen von Gebinden. Die Vorrichtung umfasst eine Zuführeinrichtung, eine dieser nachgeordneten Verteil- und Ausrichtstation zur lagenspezifischen Ausrichtung der Gebinde und eine der Verteil- und Ausrichtstation nachgeordnete Sammelstation. Die Verteil- und Ausrichtstation umfasst ein Förderband, über dem mehrere, die Förderbandbreite diagonal überbrückende, parallel zueinander angeordnete Lineareinheiten angeordnet sind. Jede Lineareinheit umfasst mindestens einen daran verfahrbaren Greifer zum Greifen jeweils eines Gebindes. Die Verfahrgeschwindigkeit der Lineareinheiten ist derart auf die Geschwindigkeit des Förderbandes abgestimmt, dass die gegriffenen Gebinde in einem Winkel von 90 Grad zur Transportrichtung des Förderbandes auf diesem versetzbar sind.

Das deutsche Patent DE 102 19 129 B4 offenbart eine Vorrichtung zum Drehen und wahlweisen Verteilen oder Zusammenführen von Gebinden, die in mindestens einer Zuführbahn beziehungsweise mindestens einem Zuteilförderer zugeführt werden. Die Gebinde werden anschließend in mindestens einer zu der oder den Zuführbahn(en) beziehungsweise Zuteilförderer(n) parallelen Abführbahn beziehungsweise Auslaufförderer in einer um eine vertikale Achse um 90 Grad gedrehten Anordnung abgeführt. Die Vorrichtung umfasst einen über der mindestens einen Abführbahn beziehungsweise über dem mindestens einen Auslaufförderer angeordneten, um eine vertikale Achse drehbar gelagerten Greifkopf zum gleichzeitigen Erfassen von mindestens zwei Gebinden. Der Greifkopf weist zwei Bügel auf, die die Gebinde zentrieren und nach dem Verdrehen freigeben. Die Bügel sind abstandsveränderlich, so dass unterschiedliche Formationen von Gebindegruppen gegriffen werden können. Die Gebindegruppen werden direkt vom jeweiligen Zuteilförderer (Zuförderer) an den jeweiligen Auslaufförderer (Abförderer) übergeben.

Aufgabe der Erfindung ist, eine Vorrichtung zum definierten Zusammenführen von Gebinden und/oder Gebindegruppen anzugeben, so dass die Gebinde und/oder Gebindegruppen unterschiedlichen Inhalts und/oder Formatierung in beliebiger Reihenfolge mindestens einem Abförderer zuführbar sind.

Die obige Aufgabe wird durch eine Vorrichtung gelöst, die die Merkmale des Anspruchs 1 umfasst.

Eine weitere Aufgabe der Erfindung ist, ein Verfahren zum definierten Zusammenführen von Gebinden und/oder Gebindegruppen anzugeben, mit dem die Gebinde und/oder Gebindegruppen unterschiedlichen Inhalts und/oder Formatierung in beliebiger Reihenfolge mindestens einem Abförderer zugeführt werden.

Die obige Aufgabe wird durch ein Verfahren gelöst, das die Merkmale des Anspruchs 9 umfasst.

Die erfindungsgemäße Vorrichtung zum definierten Zusammenführen von Gebinden und/oder Gebindegruppen umfasst mindestens zwei Zuförderer und mindestens einen Abförderer. Zwischen dem mindestens zwei Zuförderern und dem mindestens einen Abförderer ist ein Sortierförderer vorgesehen, über dem mindestens ein Greifer zugeordnet sind. Die Gebinde und/oder Gebindegruppen werden von den Zuförderern ausgewählt und gesteuert an eine jeweils ausgezeichnete erste Übergabeposition des Sortierförderers transportiert. Ausgehend von der jeweiligen ersten Übergabeposition auf dem Sortierförderer werden sie durch den mindestens einen Greifer wiederum gesteuert gegriffen, gedreht und/oder verschoben und abgesetzt bis zu einer jeweiligen zweiten Übergabeposition auf dem Sortierförderer. Die zweiten Übergabepositionen sind passend zu den Abförderern ausgerichtet, so dass die Gebinde und/oder Gebindegruppen schließlich wiederum gesteuert von der jeweiligen zweiten Übergabeposition zu dem jeweiligen Abförderer auf kurzem und linearem Weg übergeben werden. Die Zuführung bzw. Abführung der Gebinde und/oder Gebindegruppen auf mehreren Zuförderern bzw. Abförderern kann zeitlich parallel oder nacheinander erfolgen.

Das definierte Zusammenführen von Gebinden und/oder Gebindegruppen bedeutet, dass die Gebinde und/oder Gebindegruppen derart im mindestens einen Sortierförderer verschoben und oder gedreht werden, dass die Gebinde und/oder Gebindegruppen an einer vorgegebenen Position dem mindestens einen Abförderer übergeben werden. Die Gebinde und/oder Gebindegruppen werden Stoß an Stoß auf dem mindestens einen Abförderer einer weiteren Verarbeitung bzw. Handhabung zugeführt.

Die Summe der Breiten der Zuförderer kann kleiner als die Breite des Sortierförderers sein. Entsprechend kann auch die Summe der Breiten der Abförderer kleiner als die Breite des Sortierförderers sein.

Jeder Zuförderer besitzt vorzugsweise eine ausgezeichnete erste Übergabeposition zum Sortierförderer. Entsprechend besitzt der Sortierförderer eine ausgezeichnete zweite Übergabeposition zum mindestens einen Abförderer.

In einer bevorzugten Ausführungsform ist eine Programmsteuerung vorgesehen, die den mindestens einen Greifer derart steuert, dass die von dem jeweiligen Zuförderer zugeführten Gebinde und/oder Gebindegruppen derart auf dem Sortierförderer positioniert werden, dass sie exakt zur zweiten Übergabeposition vom Sortierförderer auf den jeweiligen Abförderer ausgerichtet sind. Die erfindungsgemäße Vorrichtung ermöglicht so ein Verteilen oder Zusammenführen der Gebinde und/oder Gebindegruppen passgenau von den mindestens zwei Zuförderern zu dem mindestens einen Abförderer. Das ist auch dann möglich, wenn die Summe der Breiten der Zuförderer beziehungsweise Abförderer deutlich geringer als die Breite des Sortierförderers ist und/oder die Gebinde bzw. Gebindegruppen Stoß an Stoß auf den Zu- und Abförderern transportiert werden und/oder die Gebinde bzw. Gebindegruppen dem Sortierförderer vereinzelt zugeführt werden.

Der mindestens eine Greifer kann eine Drehbewegung, beispielsweise um 90 Grad, um eine vertikal zu dem Sortierförderer verlaufende Achse ausführen. Zeitgleich oder zeitlich getrennt von der Drehbewegung knn der Greifer eine weitere Bewegung, beispielsweise eine lineare Verschiebung, parallel und/oder senkrecht zu einer Bewegungsrichtung des Sortierförderers ausführen. Diese Bewegungen werden über bzw. auf dem Sortierförderer ausgeführt, der von den Zuförderern und Abförderern zu unterscheiden und ebenfalls räumlich von diesen getrennt ist.

In einer bevorzugten Ausführungsform sind über dem Sortierförderer der Vorrichtung zwei Greifer zugeordnet und der Sortierförderer umfasst ein erstes Modul und ein zweites Modul. Beide Module umfassen jeweils einen Endlosförderer und sind nacheinander angeordnet. Dem ersten Modul ist der erste Greifer und dem zweiten Modul ist der zweite Greifer zugeordnet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Draufsicht auf die erfindungsgemäße Vorrichtung, wobei Gebinde sortenrein von drei getrennten Zuförderern auf zwei getrennte Abförderer in beliebiger Sortierung zusammengeführt werden.
Figur 2 zeigt eine schematische Draufsicht auf die erfindungsgemäße Vorrichtung, wobei Gebinde sortenrein von zwei getrennten Zuförderern gemischt auf drei getrennte Abförderer verteilt werden.
Figur 3 zeigt eine schematische Draufsicht auf die erfindungsgemäße Vorrichtung, wobei Gebinde sortenrein von zwei Zuförderern gemischt auf zwei Abförderer umverteilt werden.
Figur 4 zeigt eine schematische Draufsicht auf die erfindungsgemäße Vorrichtung, wobei Gebinde sortenrein von drei Zuförderern gemischt auf drei Abförderer umverteilt werden.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

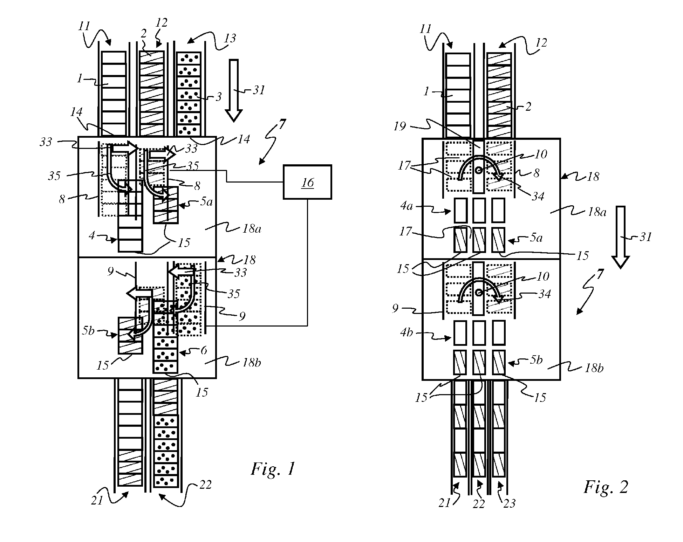

In den Figuren 1 bis 4 sind die Bewegungsrichtungen 31 der räumlich getrennten Zuförderer 11, 12, 13, des Sortierförderers 18 und der räumlich getrennten Abförderer 21, 22, 23 stets gleich. Für einen Fachmann ist jedoch offensichtlich, dass auch abweichende Bewegungsrichtungen möglich sind, ohne den Schutzbereich der Erfindung zu verlassen. In diesem Fall müssen die Drehbewegungen 34 und die weiteren Bewegungen 33 der beiden Greifer 8, 9 entsprechend angepasst werden, insbesondere von der Programmsteuerung 16.

In den Figuren 1 bis 4 ist zudem der Sortierförderer 18 stets so dargestellt, dass er ein erstes Modul 18a und ein zweites Modul 18b umfasst, die nacheinander angeordnet sind, wobei dem ersten Modul 18a der erste Greifer 8 und dem zweiten Modul 18 der zweite Greifer 9 zugeordnet ist. Für einen Fachmann ist wiederum offensichtlich, dass der Sortierförderer 18 nicht zweigeteilt sein muss und die beiden Greifer 8, 9 über einem einzigen Endlosförderer ihre Bewegungen verrichten können. Auch in diesem Fall müssen die Drehbewegungen 34 und die weiteren Bewegungen 33 der beiden Greifer 8, 9 entsprechend von der Programmsteuerung 16 angepasst werden.

**Figur 1** zeigt eine schematische Draufsicht auf die erfindungsgemäße Vorrichtung 7, wobei Gebinde 1, 2, 3 von drei Zuförderern 11, 12, 13 auf zwei Abförderer 21, 22 zusammengeführt werden.

Dabei werden zunächst jeweils die vordersten sechs auf dem dritten Zuförderer 13 aufeinander folgenden dritten Gebinde 3 an einer ersten Übergabeposition 14 des dritten Zuförderers 13 dem ersten Modul 18a des Sortierförderers 18 zugeführt. Diese dritten Gebinde 3 bilden eine dritte Gebindegruppe 6. Zeitgleich oder zeitversetzt werden die vordersten drei auf dem zweiten Zuförderer 12 aufeinander folgenden zweiten Gebinde 2 an einer anderen ersten Übergabeposition 14 des zweiten Zuförderers 12 dem ersten Modul 18a des Sortierförderers 18 zugeführt. Diese zweiten Gebinde 2 bilden eine zweite Gebindegruppe 5b.

Die beiden Gebindegruppen 6, 5b werden über den Endlosförderer des ersten Moduls 18a weiter in der Bewegungsrichtung 31 des Sortierförderers 18 an das zweite Modul 18b transportiert. Der zweite Greifer 9 greift dann die dritte Gebindegruppe 6 und verschiebt sie in einer weiteren Bewegung 33 senkrecht bzw. quer zur Bewegungsrichtung 31 des Endlosförderers des zweiten Moduls 18b. Aus den beiden Bewegungen 31, 33 ergibt sich eine resultierende Bewegung 35. Entsprechend greift der zweite Greifer 9 die zweite Gebindegruppe 5b und verschiebt sie in einer weiteren Bewegung 33 senkrecht zur Bewegungsrichtung 31 des Endlosförderers des zweiten Moduls 18b. Aus den beiden Bewegungen 31, 33 ergibt sich eine resultierende Bewegung 35. Ob der zweite Greifer 9 zuerst die dritte Gebindegruppe 6 und dann die zweite Gebindegruppe 5b oder umgekehrt zuerst die zweite Gebindegruppe 5b und dann die dritte Gebindegruppe 6 greift, ist unerheblich, der zweite Greifer 9 greift sich jedoch stets nur eine der beiden Gebindegruppen 6 bzw. 5b.

Nach dem Verschieben werden die beiden Gebindegruppen 6, 5b an jeweils einer zweiten Übergabeposition 15 des zweiten Moduls 18b abgesetzt, die gegenüber dem zweiten Abförderer 22 bzw. ersten Abförderer 21 ausgerichtet ist, so dass die beiden Gebindegruppen 6, 5b von dort aus direkt weiter zu den beiden Abförderern 21, 22 transportiert werden können.

Nachdem die vordersten beiden Gebindegruppen 6, 5b das zweite Modul 18b erreicht haben, werden jeweils die vordersten sechs auf dem ersten Zuförderer 11 aufeinander folgenden ersten Gebinde 1 an einer weiteren Übergabeposition 14 des ersten Zuförderers 11 dem ersten Modul 18a des Sortierförderers 18 zugeführt. Diese ersten Gebinde 1 bilden eine erste Gebindegruppe 4. Zeitgleich oder zeitversetzt werden die nächsten, nun die vordersten drei auf dem zweiten Zuförderer 12 aufeinander folgenden zweiten Gebinde 2 an der anderen ersten Übergabeposition 14 dem ersten Modul 18a zugeführt. Diese anderen zweiten Gebinde 2 bilden eine andere zweite Gebindegruppe 5a.

Der erste Greifer 8 greift die erste Gebindegruppe 4 und verschiebt sie in einer weiteren Bewegung 33 senkrecht zur Bewegungsrichtung 31 des Endlosförderers des ersten Moduls 18a. Aus den beiden Bewegungen 31, 33 ergibt sich eine resultierende Bewegung 35. Entsprechend greift der erste Greifer 8 die andere zweite Gebindegruppe 5a und verschiebt sie in einer weiteren Bewegung 33 senkrecht zur Bewegungsrichtung 31 des Endlosförderers des ersten Moduls 18a. Aus den beiden Bewegungen 31, 33 ergibt sich eine resultierende Bewegung 35. Ob der erste Greifer 8 zuerst die erste Gebindegruppe 4 und dann die andere zweite Gebindegruppe 5a oder umgekehrt zuerst die andere zweite Gebindegruppe 5a und dann die erste Gebindegruppe 4 greift, ist unerheblich, der erste Greifer 8 greift sich jedoch stets nur eine der beiden Gebindegruppen 5a bzw. 4.

Die beiden derart verschobenen Gebindegruppen 4, 5a werden dann jeweils an einer zweiten Übergabeposition 15 des ersten Moduls 18a abgesetzt. Die beiden zweiten Übergabepositionen 15 sind wiederum gegenüber dem ersten Abförderer 21 bzw. zweiten Abförderer 22 ausgerichtet, so dass die Gebindegruppen 4, 5a ausgehend von den jeweiligen zweiten Übergabepositionen 15 auf einem vollständig linearem Weg über den Endlosförderer des ersten Moduls 18a weiter in der Bewegungsrichtung 31 des Sortierförderers 18 über den Endlosförderer des zweiten Moduls 18b und schließlich zu den beiden Abförderern 21, 22 transportiert werden.

Eine Programmsteuerung 16 ist mit den beiden Greifern 8, 9 verbunden, so dass sie die weiteren Bewegungen 33 der beiden Greifer 8, 9 steuern kann. Ferner dient die Programmsteuerung 16 auch dazu, die vordefinierte Reihenfolge der Gebinde 1, 2, 3 und/oder Gebindegruppen 4, 5a, 5b, 6 auf dem mindestens einen Abförderer 21, 22, 23 durch geeignete Steuerung des Greifers 8, 9 und des Sortierförderers 18 zu erzielen.

Auf dem ersten Abförderer 21 werden abwechselnd erste Gebindegruppen 4 aus je sechs ersten Gebinden 1 und zweite Gebindegruppen 5b aus je drei zweiten Gebinden 2 Stoß an Stoß abtransportiert. Auf dem zweiten Abförderer 22 werden abwechselnd dritte Gebindegruppen 6 aus je sechs dritten Gebinden 3 und andere zweite Gebindegruppen 5a aus je drei anderen zweiten Gebinden 2 Stoß an Stoß abtransportiert.

**Figur 2** zeigt eine schematische Draufsicht auf die erfindungsgemäße Vorrichtung 7, wobei Gebinde 1, 2 sortenrein von zwei Zuförderern 11, 12 gemischt auf drei Abförderer 21, 22, 23 verteilt werden.

Dabei werden zunächst jeweils die vordersten drei auf dem ersten Zuförderer 11 aufeinander folgenden ersten Gebinde 1 an einer ersten Übergabeposition 14 des ersten Zuförderers 11 dem ersten Modul 18a zugeführt. Diese ersten Gebinde 1 bilden eine erste Gebindegruppe 4b. Zeitgleich werden die vordersten drei auf dem zweiten Zuförderer 12 aufeinander folgenden zweiten Gebinde 2 an einer anderen ersten Übergabeposition 14 des zweiten Zuförderers 12 dem ersten Modul 18a zugeführt. Diese zweiten Gebinde 2 bilden eine zweite Gebindegruppe 5b.

Dadurch dass die Gebinde 1 bzw. 2 an der jeweiligen ersten Übergabeposition 14 zeitversetzt an das erste Modul 18a übergeben werden, sind die ersten Gebinde 1 innerhalb der ersten Gebindegruppe 4b bzw. die zweiten Gebinde 2 innerhalb der zweiten Gebindegruppe 5b mit einer Lücke 17 versehen.

Die beiden derart mit Lücken 17 versehenen Gebindegruppen 4b, 5b werden über den Endlosförderer des ersten Moduls 18a auf linearem Weg weiter in der Bewegungsrichtung 31 des Sortierförderers 18 an das zweite Modul 18b transportiert. Der zweite Greifer 9 greift dann beide Gebindegruppen 4b, 5b gleichzeitig und dreht sie um 90 Grad in einer Drehbewegung 34. Dabei bleiben die Lücken 17 erhalten.

Nach dem Drehen werden die Gebindegruppen 4b, 5b an drei unterschiedlichen zweiten Übergabepositionen 15 des zweiten Moduls 18b abgesetzt, die gegenüber den Abförderern 21, 22, 23 ausgerichtet sind, so dass die Gebindegruppen 4b, 5b von dort aus auf kurzem und linearen Weg weiter zu den drei Abförderern 21, 22, 23 transportiert werden können. Auch dabei bleiben die Lücken 17 erhalten.

Nachdem die vordersten Gebindegruppen 4b, 5b das zweite Modul 18b erreicht haben, werden jeweils die nächsten, nun die vordersten drei auf dem ersten Zuförderer 11 aufeinander folgenden ersten Gebinde 1 an der ersten Übergabeposition 14 dem ersten Modul 18a zugeführt. Diese ersten Gebinde 1 bilden eine andere erste Gebindegruppe 4a. Zeitgleich oder zeitversetzt werden die nächsten, nun die vordersten drei auf dem zweiten Zuförderer 12 aufeinander folgenden zweiten Gebinde 2 an der anderen ersten Übergabeposition 14 dem ersten Modul 18a zugeführt. Diese zweiten Gebinde 2 bilden eine andere zweite Gebindegruppe 5a.

Entsprechend wie zuvor weisen auch die andere erste Gebindegruppe 4a und die andere zweite Gebindegruppe 5a Lücken 17 auf, die mit Lücken 17 versehenen Gebindegruppen 4a, 5a werden vom ersten Greifer 8 gleichzeitig gegriffen, beide um 90 Grad in einer Drehbewegung 34 gedreht, auf dem ersten Modul 18a an jeweils einer zweiten Übergabeposition 15 gegenüber den Abförderern 21, 22, 23 vom ersten Greifer 8 abgesetzt und von dort aus auf linearem Weg zu den Abförderern 21, 22, 23 transportiert.

Wie in Figur 1 steuert die mit den beiden Greifern 8, 9 verbundene Programmsteuerung 16 (aus Gründen der Übersichtlichkeit nicht dargestellt) die Drehbewegungen 34 der beiden Greifer 8, 9.

Je ein Distanzelement 19 ist in jedem Greifer 8, 9 zwischen den Gebindegruppen 4a und 5a bzw. zwischen den Gebindegruppen 4b und 5b angeordnet, damit die jeweils gegriffenen Gebindegruppen 4a, 5b bzw. 4b, 5b während des Greifens und Drehens nicht zusammengedrückt werden. Die so voneinander distanzierten Gebindegruppen 4a, 5b bzw. 4b, 5b können dann einzeln und taktweise auf die Abförderer 21, 22, 23 verteilt werden. Dadurch dass die Gebindegruppen 4a, 4b, 5a, 5b an der jeweiligen Schnittstelle vom zweiten Modul 18b zu den jeweiligen Abförderern 21, 22, 23 auflaufen, werden die jeweiligen erste Gebinde 1 und die jeweiligen zweite Gebinde 2 Stoß an Stoß auf den Abförderern 21, 22, 23 weitertransportiert. Auf jedem der Abförderer 21, 22, 23 folgt abwechselnd ein erstes Gebinde 1 auf ein zweites Gebinde 2. Die Lücken 17 zwischen den Gebinden 1, 2 entsprechen den Abständen der Abförderer 21, 22, 23 und werden von der Programmsteuerung 16 gesteuert und entsprechend eingestellt, wie zuvor beschrieben.

Wie aus dem Stand der Technik bekannt ist, bewirken die Drehbewegungen 34 um 90 Grad, dass in mehreren der Zuförderer 11, 12, 13 nebeneinander zugeführte Gebinde 1, 2, 3 in einem einzelnen der Abförderer 21, 22, 23 hintereinander abgeführt werden. Entsprechend bewirken die Drehbewegungen 34 um 90 Grad, dass in einem einzelnen der Zuförderer 11, 12, 13 hintereinander zugeführte Gebinde 1 bzw. 2 bzw. 3 in mehreren Abförderern 21, 22, 23 nebeneinander abgeführt werden. Die weiteren Bewegungen 33 sorgen für eine passende Ausrichtung der Gebindegruppen 4a, 4b, 5a, 5b zwischen den Zuförderern 11, 12, 13 und den Abförderern 21, 22, 23.

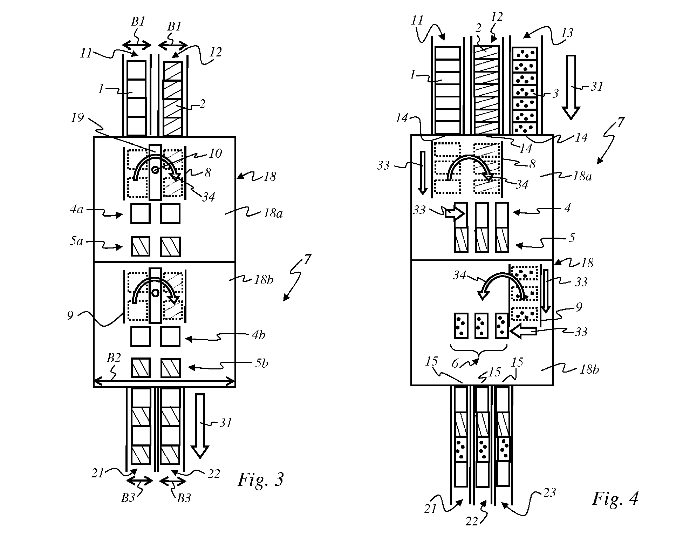

**Figur 3** zeigt eine schematische Draufsicht auf die erfindungsgemäße Vorrichtung 7, wobei Gebinde 1, 2 sortenrein von zwei Zuförderern 11, 12 gemischt auf zwei Abförderer 21, 22 umverteilt werden. Dabei wird nach demselben Prinzip wie in Figur 2 vorgegangen. Stattdessen umfassen die Gebindegruppen 4a, 4b, 5a, 5b hier jedoch zwei statt drei Gebinde 1 bzw. 2.

Die Summe der Breiten B1 der Zuförderer 11, 12 ist deutlich kleiner als die Breite B2 des Sortierförderers 18. Entsprechend ist die Summe der Breiten B3 der Zuförderer 21, 22 ebenfalls deutlich kleiner als die Breite B2 des Sortierförderers 18. Wie in Figur 1 steuert die mit den beiden Greifern 8, 9 verbundene Programmsteuerung 16 (aus Gründen der Übersichtlichkeit nicht dargestellt) die Drehbewegungen 34 der beiden Greifer 8, 9.

**Figur 4** zeigt eine schematische Draufsicht auf die erfindungsgemäße Vorrichtung 7, wobei Gebinde 1, 2, 3 sortenrein von drei Zuförderern 11, 12, 13 gemischt auf drei Abförderer 21, 22, 23 umverteilt werden. Dabei wird nach demselben Prinzip wie in den Figuren 2 und 3 vorgegangen. Die Gebindegruppen 4, 5, 6 umfassen drei Gebinde 1, 2 bzw. 3. Auf dem ersten Modul 18a werden die Gebindegruppen 4, 5 zeitgleich vom ersten Greifer 8 gedreht. Auf dem zweiten Modul 18b wird nur eine, die Gebindegruppe 6 vom zweiten Greifer 9 gedreht. Auf jedem der Abförderer 21, 22, 23 werden so Stoß an Stoß hintereinander je ein erstes Gebinde 1, ein zweites Gebinde 2 und ein drittes Gebinde 3 weiter transportiert.

Allgemein gilt, dass die Zuförderer 11, 12, 13, der Sortierförderer 18 und die Zuförderer 21, 22, 23 in einer Ebene liegen können, sie müssen es aber nicht, da die Programmsteuerung 16 die Drehbewegungen 34 und weiteren Bewegungen 33 entsprechend steuern kann.

Die Erfindung wurde unter Bezugnahme auf eine bevorzugte Ausführungsform mit zwei Modulen und zwei Greifern beschrieben. Es ist jedoch für einen Fachmann vorstellbar, dass Abwandlungen oder Änderungen der Erfindung gemacht werden können, insbesondere nur ein Greifer und ein Modul oder mehr als zwei Greifer und mehr als zwei Module vorgesehen sind, ohne dabei den Schutzbereich der nachstehenden Ansprüche zu verlassen.

### Bezugszeichenliste:

- 1, 2, 3: Gebinde
- 4, 5, 6: Gebindegruppe
- 7: Vorrichtung
- 8: erster Greifer
- 9: zweiter Greifer
- 10: Achse
- 11, 12, 13: Zuförderer
- 14: erste Übergabeposition
- 15: zweite Übergabeposition
- 16: Programmsteuerung
- 17: Lücke
- 18: Sortierförderer
- 18a: erstes Modul
- 18b: zweites Modul
- 19: Distanzelement
- 21, 22, 23: Abförderer
- 31: Bewegungsrichtung des Zuförderers, Abför- derers und/oder Sortierförderers
- 33: weitere Bewegung
- 34: Drehbewegung
- 35: resultierende Bewegung
- B1: Breite eines Zuförderers
- B2: Breite des Sortierförderers
- B3: Breite eines Abförderers

## Patentansprüche

1. Vorrichtung (7) zum definierten Zusammenführen von Gebinden (1, 2, 3) und/oder Gebindegruppen (4, 4a, 4b, 5a, 5b, 6) mit mindestens zwei Zuförderern (11, 12, 13), mindestens einem Abförderer (21, 22, 23) und mindestens einem zwischen den Zuförderern (11, 12, 13) und dem mindestens einen Abförderer (21, 22, 23) angeordneten Sortierforderer (18), **dadurch gekennzeichnet, dass** eine Summe der Breiten (B1) der mindestens zwei Zuförderer (11, 12, 13) kleiner als eine Breite (B2) des Sortierförderers (18) ist, und wobei eine Summe der Breiten (B3) des mindestens einen Abförderers (21, 22, 23) kleiner ist als die Breite (B2) des Sortierförderers (18) und wobei über dem Sortierförderer (18) mindestens ein Greifer (8, 9) angeordnet ist.

2. Vorrichtung (7) nach einem der voranstehenden Ansprüche, wobei die mindestens zwei Zuförderer (11, 12, 13) eine ausgezeichnete erste Übergabeposition (14) zum Sortierförderer (18) besitzen, und dass der Sortierförderer (18) eine ausgezeichnete zweite Übergabeposition (15) zum mindestens einen Abförderer (21, 22, 23) besitzt.

3. Vorrichtung (7) nach Anspruch 2, wobei eine Programmsteuerung (16) vorgesehen ist, die den mindestens einen Greifer (8, 9) derart steuert, dass die von den mindestens zwei Zuförderern (11, 12, 13) zugeführten Gebinde (1, 2, 3) und/oder Gebindegruppen (4, 4a, 4b, 5a, 5b, 6) derart auf dem Sortierförderer (18) positionierbar sind, dass sie exakt zur zweiten Übergabeposition (15) vom Sortierförderer (18) auf den mindestens einen Abförderer (21, 22, 23) ausgerichtet sind.

4. Vorrichtung (7) nach einem der voranstehenden Ansprüche, wobei durch den mindestens einen Greifer (8, 9) jeweils eine Drehbewegung (34) um eine vertikal zu dem Sortierförderer (18) verlaufende Achse (10) und/oder eine weitere Bewegung (33) parallel und/oder senkrecht zu einer Bewegungsrichtung (31) des Sortierförderers (18) ausführbar ist.

5. Vorrichtung (7) nach Anspruch 4, wobei die Drehbewegung (34) eine Drehung um 90 Grad ist.

6. Vorrichtung (7) nach Anspruch 4, wobei die weitere Bewegung eine lineare Verschiebung (33) ist.

7. Vorrichtung (7) nach einem der voranstehenden Ansprüche, wobei über dem Sortierförderer (18) zwei nacheinander angeordnete Greifer (8, 9) vorgesehen sind.

8. Vorrichtung (7) nach Anspruch 7, wobei der Sortierförderer (18) ein erstes Modul (18a) und ein zweites Modul (18b) mit jeweils einem Endlosförderer umfasst, die nacheinander angeordnet sind, wobei dem ersten Modul (18a) der erste Greifer (8) und dem zweiten Modul (18b) der zweite Greifer (9) zugeordnet ist.

9. Verfahren zum definierten Zusammenführen von Gebinden (1, 2, 3) und/oder Gebindegruppen (4, 4a, 4b, 5a, 5b, 6), **gekennzeichnet durch** die folgenden Schritte:
• dass mindestens zwei Zuförderer (11, 12, 13) jeweils mindestens ein Gebinde (1, 2, 3) und/oder eine Gebindegruppe (4, 4a, 4b, 5a, 5b, 6) ausgewählt und gesteuert zu einem Sortierförderer (18) mit mindestens einem Greifer (8, 9) an eine ausgezeichnete erste Übergabeposition (14) zuführt;
• dass der mindestens eine Greifer (8, 9) die ihm zugeführten Gebinde (1, 2, 3) und/oder Gebindegruppen (4, 4a, 4b, 5a, 5b, 6) greift, sie gesteuert dreht und/oder verschiebt und derart an einer jeweiligen zweiten Übergabeposition (15) auf dem Sortierförderer (18) zu dem mindestens einen Abförderer (21, 22, 23) positioniert, dass die Gebinde (1, 2, 3) und/oder die Gebindegruppen (4, 4a, 4b, 5a, 5b, 6) zu dem sich an den Sortierförderer (18) an der zweiten Übergabeposition (15) anschließenden mindestens einen Abförderer (21, 22, 23) ausgerichtet sind.

10. Verfahren nach Anspruch 9, wobei die Gebinde (1, 2, 3) und/oder die Gebindegruppen (4, 4a, 4b, 5a, 5b, 6) auf den mindestens zwei Zuförderern (11, 12, 13) und dem mindestens einen Abförderer (21, 22, 23) Stoß an Stoß transportiert werden.

11. Verfahren nach einem der Ansprüche 9 bis 10, wobei die mindestens zwei Zuförderer (11, 12, 13) derart gesteuert werden, dass die Gebinde (1, 2, 3) und/oder Gebindegruppen (4, 4a, 4b, 5a, 5b, 6) dem Sortierförderer (18) vereinzelt zugeführt werden.
